# EUROPÄISCHE PATENTSCHRIFT

(11) **EP 0 494 392 B1**
(45) Veröffentlichungstag und Bekanntmachung des Hinweises auf die Patenterteilung: **08.06.1994**
(21) Anmeldenummer: 91121243.9
(22) Anmeldetag: 11.12.1991
(51) Int. Cl.: B62D 1/26

(54) **Gelenkte Achse für spurführbare Nutzfahrzeuge, insbesondere Omnibusse**
Steering axle for track-guidable commercial vehicles, especially buses
Essieu directeur pour véhicules utilitaires guidables dans un alignement, notamment pour autobus

(30) Priorität: 08.01.1991 DE 4100294
(43) Veröffentlichungstag der Anmeldung: 15.07.1992
(73) Patentinhaber: MERCEDES-BENZ AG, 70327 Stuttgart (DE)
(72) Erfinder: Mauz, Uwe, Dipl.-Ing., W-7300 Esslingen (DE)

(56) Entgegenhaltungen:
- DE-A- 3 704 512
- US-A- 4 454 819

## Beschreibung

Die Erfindung betrifft eine gelenkte Achse für spurführbare Nutzfahrzeuge, insbesonders Omnibusse, mit den Merkmalen des Oberbegriffs von Patentanspruch 1.

Eine Lenkachse dieser Art ist beispielsweise als Starrachse aus der DE-A- 37 04 5 12 bekannt. Bei dieser Achskonstruktion erstrecken sich die mit den Achsschenkeln starr verbundenen Lenkhebel entgegengesetzt zur Fahrtrichtung. Demgemäß befindet sich die mit ihren Enden an den Lenkhebeln angelenkte Spurstange auf der Achsseite, die derjenigen gegenüberliegt, auf der die jeweils eine Querführungsrolle tragenden Tragarme für die Spurführung des Nutzfahrzeuges vorgesehen sind.

Während der Fahrt entlang einer Spurführungsstrecke werden die radführenden Seitenführungskräfte über die sich an deren spurbestimmenden Querführungsstegen abwälzenden Spurführungsrollen auf die sich von den Achsschenkeln in Fahrtrichtung erstreckenden Tragarme übertragen.

Durch die Seitenkräfte und die große Länge der sich in Fahrtrichtung erstreckenden Tragarmabschnitte entstehen dabei Biegemomente, die einen großen Tragarmquerschnitt und dementsprechend schweren Tragarm erfordern. Der Gewichtsanteil der Tragarme an der ungefederten Achsmasse ist deshalb erheblich.

Der Erfindung liegt die Aufgabe zugrunde, eine Lenkachse in einer dem Oberbegriff des Patentanspruches 1 entsprechenden Ausbildung so zu verbessern, daß sie einen geringeren konstruktiven Aufwand erfordert und sich das Gewicht der Tragarme erheblich verringern läßt.

Diese Aufgabe wird erfindungsgemäß durch die kennzeichnenden Merkmale des Patentanspruchs 1 gelöst.

Bei der erfindungsgemäßen Achskonstruktion bilden der einem Radträger zugeordnete Lenkhebel und der Tragarm ein gemeinsames Bauteil, und die Spurstange übernimmt die Abstützung der von den Spurführungsrollen auf die Tragarme übertragenen Seitenführungskräfte. Damit erübrigt sich die Ausstattung der Achsträger mit einem speziellen Lenkhebel und die an den Tragarmen angelenkte, die Seitenführungskräfte aufnehmende Spurstange ermöglicht eine entsprechend schlanke und damit gewichtsreduzierte Tragarmausbildung. Die Radträger können dabei jeweils einer unabhängigen Radaufhängung oder einer Starrachse zugeordnet sein.

Im Falle einer Lenkachse mit unabhängigen Radaufhängungen ergibt sich dabei eine vorteilhafte Konstruktion nach Patentanspruch 2.

Für eine ausgewogene Lenkkinematik ist es dabei günstig, die Anordnung des Lenkzwischenhebels gemäß Patentanspruch 3 vorzusehen.

In der Zeichnung ist ein Ausführungsbeispiel der Erfindung dargestellt. Es zeigen:
- Figur 1: eine Vorderansicht einer mit unabhängigen Radaufhängungen ausgestatteten, gelenkten Achse für einen Niederflurbus,
- Figur 2: einen Schnitt durch die Lenkachse entlang der Linie II-II der Figur 1,
- Figur 3: eine Draufsicht auf die Darstellung gemäß Figur 2,
- Figur 4: einen Schnitt entlang der Linie IV-IV der Figur 2 durch das Führungsgelenk des Dämpferbeins der Lenkachse, wobei das Führungsgelenk in entspanntem Zustand gezeigt ist,
- Figur 5: eine Ansicht auf den unteren Teil des Radträgers, in Richtung des Pfeiles C der Figur 1 gesehen,
- Figur 6: einen Schnitt entlang der Linie VI-VI der Figur 5,
- Figur 7: einen Schnitt entlang der Linie VII-VII der Figur 5.
- Figur 8: einen entlang der Linie IV-IV der Figur 2 geführten Schnitt durch eine Konstruktionsvariante eines Führungsgelenkes.

Die gezeigte Lenkachse weist zwei einander entsprechende Einzelradaufhängungen auf, von denen lediglich eine gezeigt ist. Diese umfaßt einen Radträger 10, auf dessen Lagerzapfen 12 ein Rad 14 drehbar gelagert ist. Der Radträger 10 ist mittels eines unteren Schräglenkers 16, eines beispielsweise als Dämpferbein 18 ausgebildeten oberen Radführungsgliedes und einer Lenkeinrichtung 19 geführt.

Der Schräglenker 16 ist aus einem sich vorzugsweise über die Fahrzeuglängsmittenebene a-a hinaus erstreckenden, einen Querlenker bildenden Lenkerarm 20 und einem mit diesem starr verbundenen, einen Längslenker bildenden Lenkerarm 22 gebildet, der, in Draufsicht betrachtet und, bezogen auf die Fahrtrichtung F, hinter der Raddrehachse 24 liegt und sich schräg nach vorne und außen und in der Konstruktionslage im wesentlichen horizontal erstreckt.

Der Lenkerarm 20 befindet sich für diese Radaufhängung, bezogen auf die Fahrtrichtung F, ausgehend von seiner Verbindungsstelle mit dem Lenkerarm 22, vor der Raddrehachse 24. Dementsprechend ist der entsprechende Lenkerarm für die gegenüberliegende Radaufhängung hinter der Radachse 24 vorgesehen.

Die aufbaufesten Lager 23 und 25 beider Lenkerarme 20 und 22 definieren aufgrund einer entsprechend gewählten Lenkerlänge und einer entsprechenden Lenkereinpassung eine Schräglenker-Schwenkachse 26, die, in Draufsicht betrachtet, und mit bezug auf die Fahrtrichtung F, hinter der Raddrehachse 24 liegt und sich schräg von innen nach außen hinten erstreckt. Sie nimmt dabei eine Schräglage zwischen 35° und 60°, vorzugsweise 50°, zur Fahrzeuglängsmittenebene a-a ein.

Für den Schräglenker 16 ist damit aufbauseitig eine entsprechend breite Abstützbasis geschaffen, wobei aus der Längenauslegung der beiden Lenkerarme 20 und 22 und der Einpassung des Schräglenkers 16 in die Lenkachse eine Achskinematik resultiert, durch die sich u. a. bei Ein- und Ausfederungen Sturzänderungen auf einem Kleinstwert halten lassen.

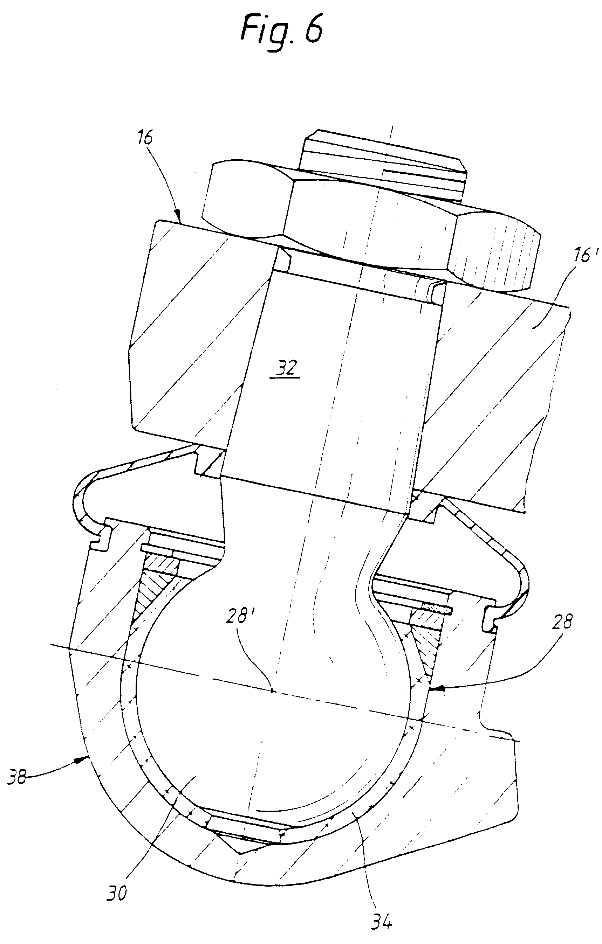

Die Anlenkung des Schräglenkers 16 am Radträger 10 ist mittels eines hängenden Traggelenkes 28 (siehe Figur 6) bewerkstelligt, das ein Kugelgelenk bildet. Dessen Gelenkkugel 30 sitzt an einem vorzugsweise konischen Zapfen 32, der seinerseits im radträgerseitigen Endstück 16′ des Schräglenkers 16 derart gehalten ist, daß sich die Gelenkkugel 30 an der Lenkerunterseite befindet.

Eine die Gelenkkugel 30 aufnehmende Lagerpfanne 34 ist in einem Endstück eines an der Unterseite des Radträgers 10 innerhalb der Radfelge 36 befestigten Traggliedes 38, vorzugsweise durch Einformen, vorgesehen. Die Kugelpfanne 34 befindet sich hierbei zwischen zwei in gleicher Ebene vorgesehenen, oberen Lenkhebel-Spannflächen 40 und 42, zu denen, bei montiertem Traggelenk 28, dessen Zapfen 32 in spitzem Winkel nach oben und in Fahrzeugquerrichtung nach innen gerichtet ist.

Die Spannflächen 40 und 42 bilden jeweils eine obere Stirnfläche eines an das Tragglied 38 angeformten Befestigungsauges 44 bzw. 46, das jeweils von einer Bohrung 48 bzw. 50 durchsetzt ist.

Fluchtend zu diesen Bohrungen 48 bzw. 50 sind auch untere Befestigungsaugen 52 und 54 des Radträgers 10 von jeweils einer Bohrung 56 bzw. 58 durchdrungen. Diese Befestigungsaugen 52 und 54 begrenzen eine sich in Fahrzeugquerrichtung nach innen öffnende Vertiefung 59 des Radträgers 10, welche das auf dem Zapfen 32 des Traggelenkes 28 sitzende Endstück 16′ des Schräglenkers 16 z. T. aufnimmt.

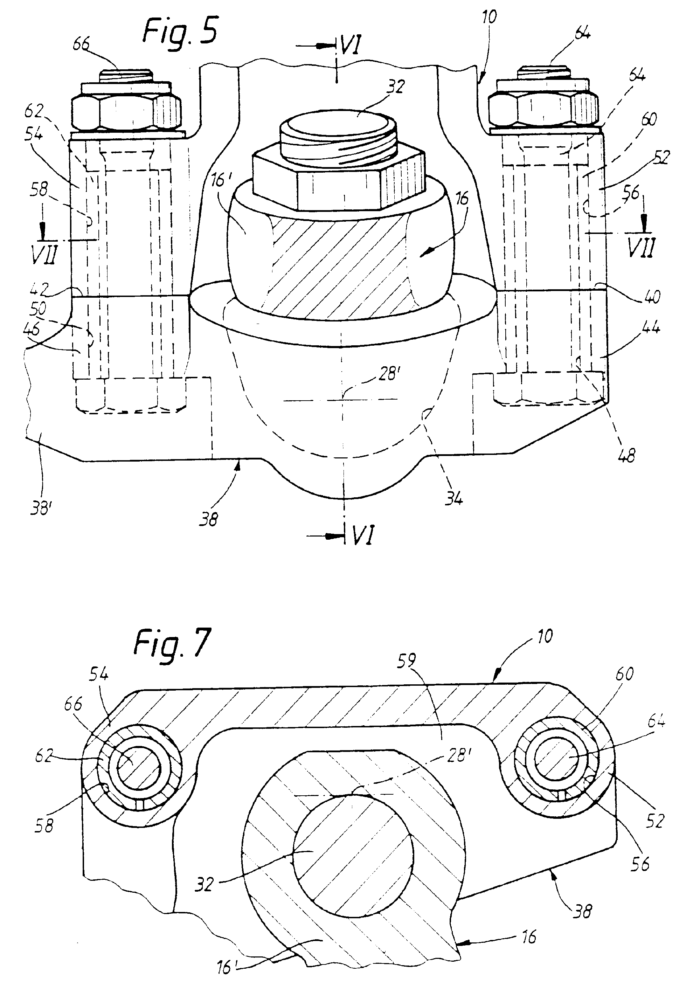

Mittels jeweils einer in die Bohrungen 48, 50, 56, 58 eingebrachten Scherbuchse 60 bzw. 62 und den Schrauben 64 und 66 (siehe Figur 5) ist das Tragglied 38 am Radträger 10 lösesicher festgelegt.

Vom Tragglied 38 erstreckt sich in Fahrtrichtung F ein in Fahrzeugquerrichtung nach innen abragender Anschlußteil 38′ weg. Beide Teile 38 und 38′ bilden zusammen einen Lenkhebel.

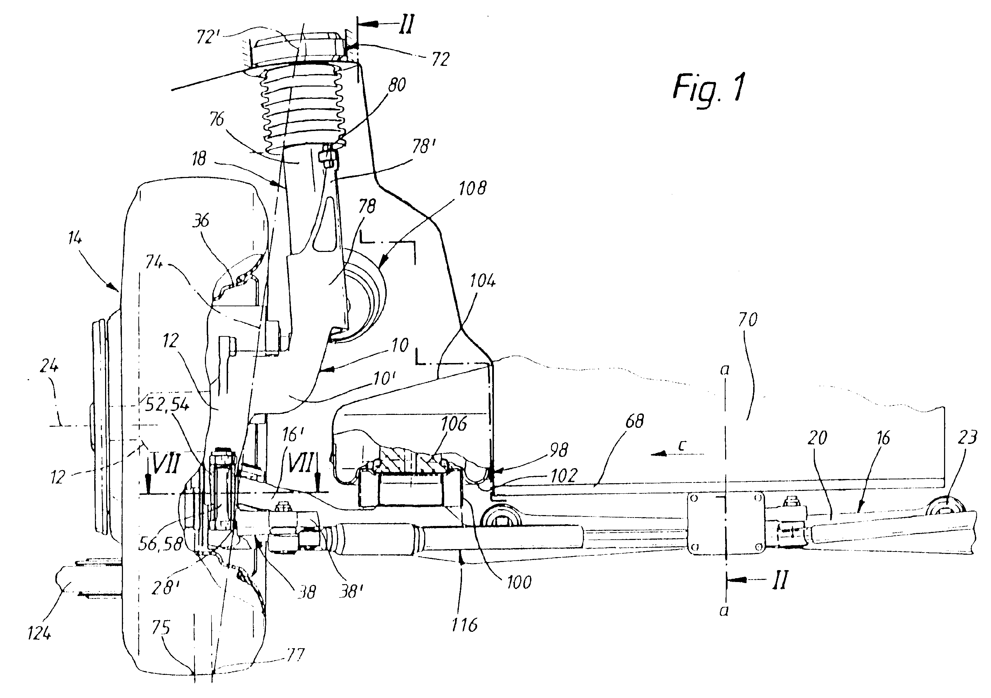

Wie Figur 1 zeigt, befindet sich das Traggelenk 28 bzw. dessen Gelenkpunkt 28′ ungefähr in der Horizontalebene, in der sich der die größere Länge aufweisende und in Fahrzeugquerrichtung gerichtete Lenkerarm 20 des Schräglenkers 16 erstreckt. Dies ist durch entsprechendes Abkröpfen des Schräglenkerendstückes 16′ schräg nach oben erreicht. Dadurch ist es möglich, die Höhe eines Fußbodens 68, beispielsweise eines in der Fahrzeuglängsmittenebene a-a verlaufenden Durchganges 70 eines Omnibusaufbaus, über den Achsen sehr tief legen zu können.

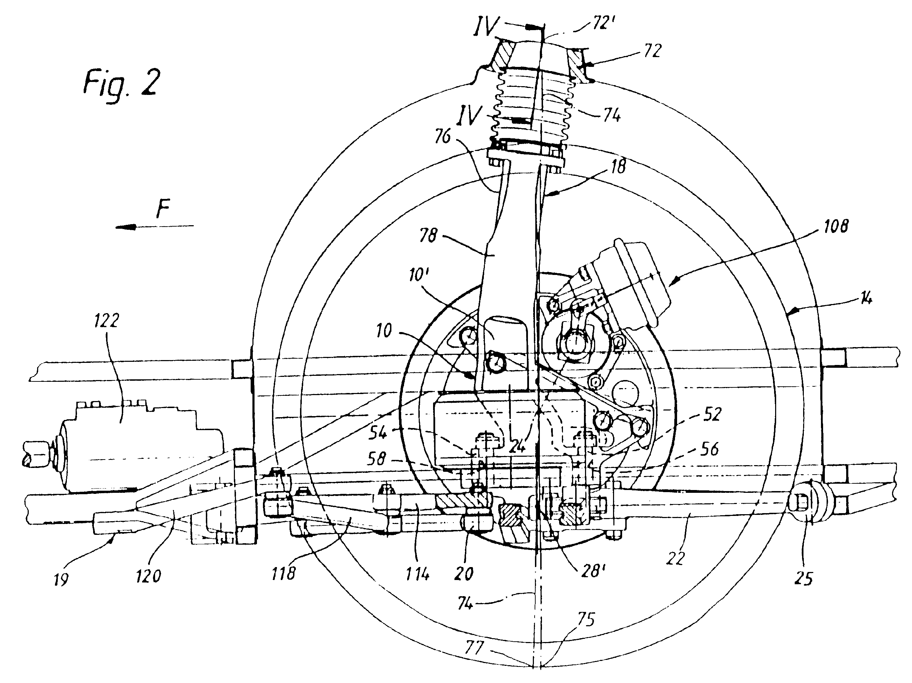

Wie die Figuren 1 und 2 zeigen, ist das Dämpferbein 18 vorzugsweise so in die Einzelradaufhängung eingepaßt, daß es sich von dessen oberem, aufbaufesten, elastischen Führungsgelenk 72 in Fahrzeugquerrichtung schräg nach innen unten, und bezogen auf die Fahrtrichtung F, nach vorne unten erstreckt.

Der Gelenkpunkt 28′ des Traggelenkes 28 und der Gelenkpunkt 72′ des Führungsgelenkes 72 des Dämpferbeines 18 definieren eine Lenkachse 74, aus deren Verlauf sich einerseits, aufgrund entsprechender Spreizung, ein positiver Lenkrollhalbmesser und andererseits ein, in Fahrtrichtung F gesehen, vor dem Radaufstandspunkt 75 liegender Spurpunkt 77 und damit ein positiver Radnachlauf ergibt.

Das untere Endstück des Zylinderrohres 76 des Dämpferbeines 18 endet in entsprechend großem Abstand oberhalb des Schräglenker-Endstückes 16′ (siehe Figur 1) und ist hierzu in einem nach oben gerichteten Hals 78 gehalten, der von einem sich oberhalb des Lenkerendstückes 16′ in Fahrzeugquerrichtung erstreckenden Radträgeransatz 10′ gehalten ist.

Die Schräglenkeranordnung stellt auch bei Federbewegungen des Rades 14 eine weitgehende Konstanz der Spreizung sicher.

Die Biegebeanspruchung des Dämpferbein-Zylinderrohres 76 durch aus Quer- und Längskräften erwachsenden Biegemomenten ist dadurch entsprechend vermindert, daß ein Abstützelement in Form einer Halsverlängerung 78′ vorgesehen ist, die das Zylinderrohr 76 über einen Teil seiner Länge teilweise umgreift.

Um für das Rad 14 bei Einfederung genügenden Freigang zu schaffen, stützt sich die Halsverlängerung 78′ vorzugsweise an dem der Fahrzeuglängsmittenebene a-a zugekehrten Rohrumfangsteil ab. Dabei ist an dieser Abstützseite zur Erzeugung der erforderlichen Reaktionskraft eine Verschraubung 80 der Halsverlängerung 78′ an deren freiem Ende mit dem Rohrmantel vorgesehen.

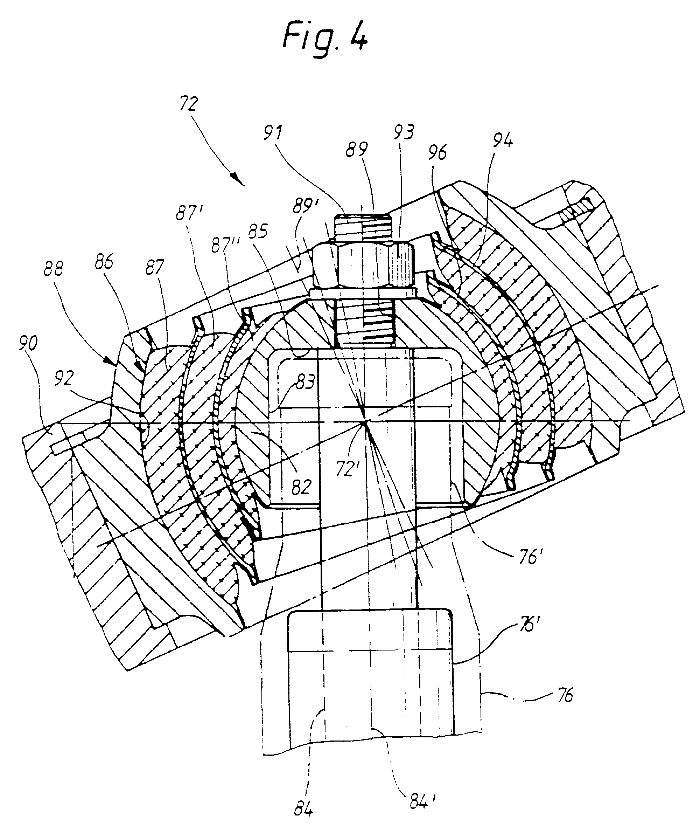

Das obere Führungsgelenk 72 ist derart gestaltet, daß es zu einer stark verringerten Reibung in der Kolbenstangenführung des Dämpferbeines 18 beträgt. Wie Figur 4 zeigt, ist hierzu dasselbe als in Fahrzeugquerrichtung vorspannbares Kugelgelenk ausgebildet, das in entspanntem Zustand gezeigt ist.

Mit 82 ist ein innerer Lagerteil in Form einer auf dem oberen Ende einer Kolbenstange 84 befestigten Gelenkkugel bezeichnet, die in einen Gummikörper 86, vorzugsweise in Form eines Gummi-Metallelementes, einvulkanisiert ist, das seinerseits in einen äußeren , ein Lagergehäuse 88 bildenden Lagerteil einvulkanisiert ist. Das Lagergehäuse 88 seinerseits ist in einen Träger 90 eingesetzt, der an einer Aufnahmebasis des Fahrzeugaufbaus befestigbar ist, was im einzelnen der Einfachheit halber in den Figuren 1 und 4 nicht dargestellt ist.

Wie aus Figur 4 zu ersehen ist, weist die Gelenkkugel 82 eine Sacklochbohrung 83 auf, die am Boden 85 von einer zentralen Bohrung 89 durchsetzt ist. Diese ist von einem am freien Stirnende der Kolbenstange 84 angeformten Gewindeschaft 91 durchdrungen.

Das Stirnende der Kolbenstange 84 stützt sich am Boden 85 der Sacklochbohrung 83 ab und ist mit diesem durch eine auf den Gewindeschaft 91 aufgeschraubte Gewindemutter 93 verspannt.

Der Durchmesser der Sacklochbohrung 83 ist etwas größer gewählt als der Außendurchmesser des oberen Endstückes 76′ des Zylinderrohres 76.

Der Eingriff der Kolbenstange 84 in die Sacklochbohrung 83 bietet den Vorteil eines relativ kleinen Abstandes des Gelenkpunktes 72′ vom oberen Endstück 76′ des Zylinderrohres 76 in allen Federungszuständen der Radaufhängung.

Bei maximaler Einfederung vermag dieses Endstück 76′ in die Gelenkkugel 82 einzutauchen, was hinsichtlich der Bauhöhe der Radaufhängung Vorteile bietet. Die Anordnung der Gelenkkugel 82 auf der Kolbenstange 84 ist leicht zu bewerkstelligen, wobei die gegenseitige Verspannung dieser Teile 82 und 84 eine sichere Dämpferkraftübertragung in das Kugelgelenk 72 sowie eine ebensolche Abstützung von Zug- und Druckkräften und des Drehmoments gewährleistet.

Das Lagergehäuse 88 ist in Art einer an einander gegenüberliegenden Seiten abgeschnittenen, also beidseitig offenen Hohlkugel ausgebildet, deren Zentrum mit demjenigen der Gelenkkugel 82 zusammenfällt und an deren Innenumfangsfläche 92 das Gummi-Metallelement 86 anvulkanisiert ist.

Das Gummi-Metallelement 86 besteht aus mehreren, beispielsweise drei teilkugelförmigen Gummikörperteilstücken 87, 87′ 87′′, zwischen die zur Erzielung einer bestimmten Federcharakteristik zur Erzeugung der erforderlichen Lagervorspannkräfte Zwischenbleche 94 und 96 einvulkanisiert sind, die, analog zu den Gummikörperteilstücken 87, 87′, 87′′, in Art von an einander gegenüberliegenden Umfangsbereichen abgeschnittenen Hohlkugeln ausgebildet sind.

In der in Figur 4 gezeigten Konstruktionslage des Führungsgelenkes 72 weicht die Lage der durch den Gelenkpunkt 72′ hindurchgehenden Achse 84′ der Kolbenstange 84 von der den Gelenkpunkt 72′ durchdringenden Achse 89′ des Lagergehäuses 88 ab.

Beim Einbau des Führungsgelenkes 72 werden Lagergehäuse 88 und Kolbenstange 84 in der Zeichenebene der Figur 4 relativ zueinander derart verschwenkt, daß beide Achsen 84′ und 89′ vorzugsweise im wesentlichen zusammenfallen. Dabei erhält das Gummi-Metallelement 86 eine solche Vorspannung, daß in der Einbaulage des Führungsgelenkes 72, bezogen auf die Konstruktionslage des Fahrzeugaufbaues, die Kolbenstange 84 in der oberen Kolbenstangenführung des Dämpferbein-Zylinderrohres 76 leicht losbrechen kann bzw. mit optimal minimierter Reibung geführt ist. Zu diesem Zweck versucht das vorgespannte Gummi-Metallelement 86 die Kolbenstange 84, gemäß Figur 1, im Uhrzeigersinn und damit das Dämpferbein-Zylinderrohr 76 in Fahrzeugquerrichtung nach außen zu verschwenken.

Die untere Abstützung des Dämpferbeines 18, weit oberhalb des abgekröpften Schräglenkerendstückes 16′ bietet den Vorteil, eine Luftfeder 98 innerhalb der Einzelradaufhängung in radnahem Bereich vorsehen zu können. Deren Stützkolben 100 ist dabei auf dem Schräglenker 16 und deren Luftbalg 102 mit einer Deckelplatte an einer aufbaufesten Konsole 104 abgestützt.

Diese, den Durchgang 70 des Omnibusaufbaues entsprechend breit auszulegen gestattende Luftfederanordnung ermöglicht ein günstiges Übersetzungsverhältnis für die Luftfeder 98 und eine Dimensionierung ihres Luftbalges 102, die es ermöglicht, auf eine Zusatzfeder in Form einer Schaubenfeder aus Stahl oder z. B. eine glasfaserverstärkte Kunststoffeder als Querblattfeder verzichten zu können.

106 bezeichnet einen in den Luftbalg 102 integrierten Puffer für einen progressiven Kennlinienverlauf nach einem vorbestimmten Einfederweg.

Mit 108 ist als Ganzes eine an sich bekannte, druckluftgesteuerte Betätigungsvorrichtung für eine nicht näher gezeigte Scheiben- oder Trommelbremse bezeichnet.

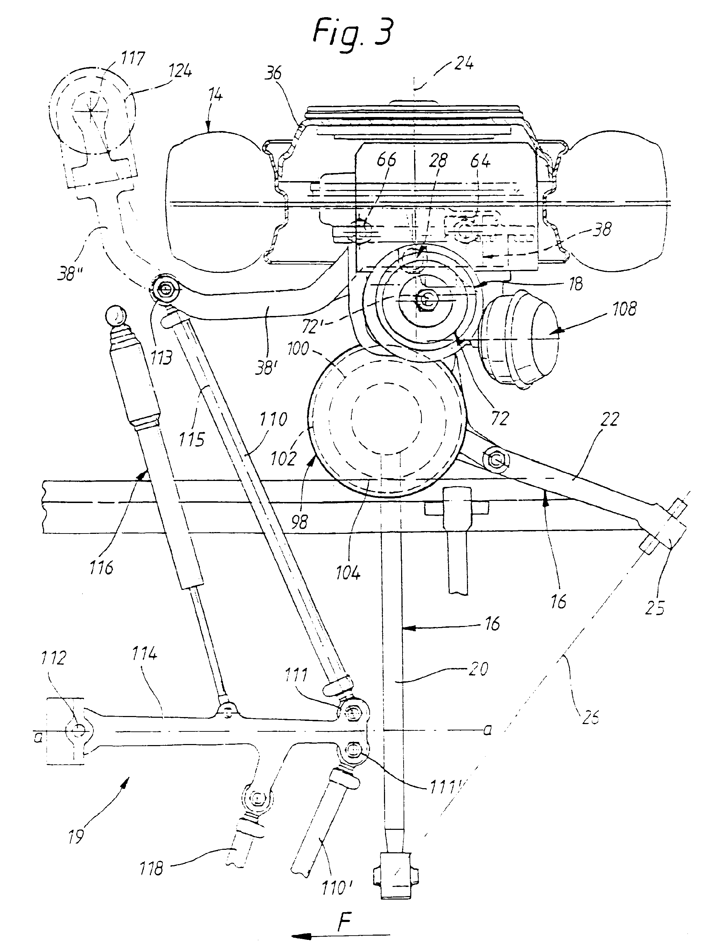

Wie Figur 3 zeigt, erstreckt sich der Lenkhebel 38, 38′, bezogen auf die Fahrtrichtung F, vor der Raddrehachse 24 aus der Radfelge 36 heraus und im wesentlichen horizontal in Fahrtrichtung F. An dessen freiem Ende ist mit seinem einen Ende ein Spurstangenteilstück 110 einer beispielsweise zweigeteilten Spurstange angelenkt, deren anderes Ende an einem aufbauseitig in der Fahrzeuglängsmittenebene a-a um eine vertikale Achse 112 verschwenkbaren Lenkzwischenhebel 114 angelenkt ist, an dem sich auch ein weiteres Spurstangenteilstück 110′ in Richtung auf die andere Einzelradaufhängung weg erstreckt.

Das innere Gelenk 111 bzw. 111′ beider Spurstangenteilstücke 110, 110′ am Lenkzwischenhebel 114 befindet sich in wesentlich kleinerem Abstand zu der die Raddrehachse 24 enthaltenden Fahrzeugquerebene als deren lenkhebelseitiges Gelenk 113.

116 bezeichnet einen am Lenkzwischenhebel 114 angelenkten Lenkungsdämpfer, während 118 einen durch einen Lenkstockhebel 120 (Figur 2) eines Lenkgetriebes 122 verstellbaren Lenkstange bezeichnet.

Die Erstreckungsrichtung des Lenkhebels 38, 38′ bietet den Vorteil, diesen, wie gezeigt, auch für ein spurführbares Lenken der Lenkachse des Niederflurbusses oder eines anderen Nutzfahrzeuges einsetzen zu können. Hierzu ist der Lenkhebel 38, 38′ entsprechend zu verlängern.

Der Lenkhebel 38, 38′ erstreckt sich dann mit einem Hebelteilstück 38′′, das Rad 14 frontseitig übergreifend, nach außen und trägt eine Spurführungsrolle 124, die sich beim Fahren entlang einer Spurführungsstrecke an einem nicht dargestellten Querführungssteg abwälzt und dabei die radführenden Seitenführungskräfte auf den Lenkhebel 38, 38′, 38′′ überträgt.

In diesem Falle überbrücken die Spurstangenteilstücke 110, 110′, in Verbindung mit dem Lenkzwischenhebel 114, die Distanz zwischen den Lenkhebeln 38, 38′, 38′′ beider Einzelradaufhängungen und bilden dabei Lenkhebel-Abstützstreben, die bei zuverlässiger Abstützung der Seitenführungkräfte, insbesondere bei Geradeausfahrstellung der Räder 14, eine entsprechend günstige Auslegung der Lenkhebelquerschnitte ermöglichen.

Die Anordnung der Gelenke 111 und 113 des Spurstangenteilstückes 110 und die entsprechenden Gelenke des anderen Spurstangenteilstückes 110′, von denen lediglich das innere Gelenk 111′ gezeigt ist, ist hierzu derart gewählt, daß die Längsachse 115 der Spurstangenteilstücke 110, 110′ in Geradeausfahrstellung der Räder 14 auf die Drehachse 117 der am jeweiligen Lenkhebel 38, 38′ gelagerten Spurführungsrolle 124 gerichtet ist. Dabei befindet sich das äußere Gelenk 113 am Lenkhebel 38, 38′, 38′′ in dessen radial äußerem, der Spurführungsrolle 124 benachbarten Bereich. Damit übernimmt bei dieser Radstellung die aus den Spurstangenteilstücken 110, 110′ gebildete Spurstange die Abstützung der von den Spurführungsrollen 124 auf die Tragarme 38, 38′, 38′′ übertragenen Seitenführungskräfte.

Schließlich gewährleisten die Anordnung des Schräglenkers 16 und die fahrzeugmittig abgestützten Spurstangenteilstücke 110, 110′ minimale Vorspuränderungen.

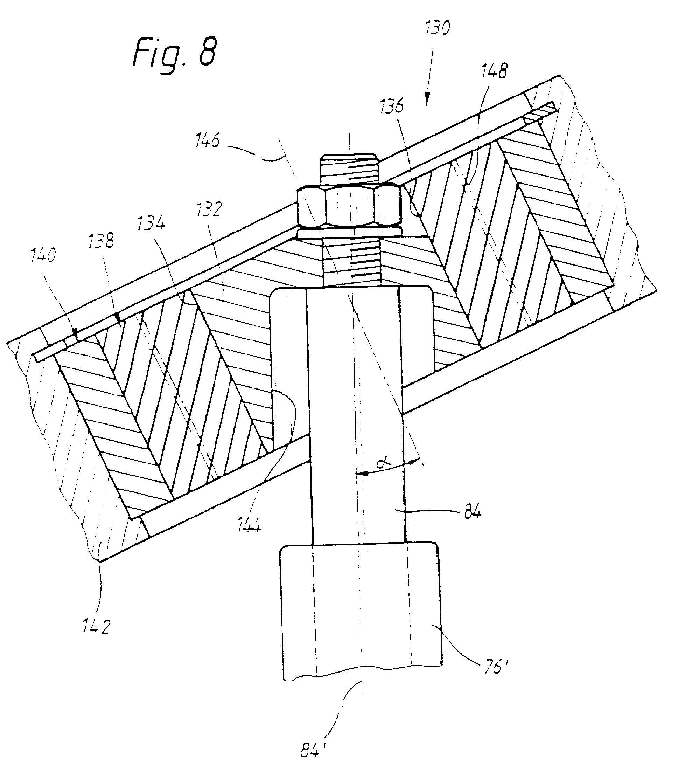

In Figur 8 ist ein weiteres Ausführungsbeispiel eines als Ganzes mit 130 bezeichneten Führungsgelenkes veranschaulicht.

Hier weist der innere, mit 132 bezeichnete Lagerteil eine zylindrische Außenumfangsfläche 134 auf und ist in eine zentrale Ausnehmung 136 eines vorzugsweise kreisringförmigen Gummikörpers 138 einvulkanisiert, der seinerseits in ein Lagergehäuse 140 einvulkanisiert ist. Letzteres sitzt in einem Lagerträger 142.

Mit 144 ist eine in den Lagerteil 132 auf seiner dem Stoßdämpfer 76, 84 zugekehrten Stirnseite eingebrachte Sacklochbohrung bezeichnet, deren Achse mit der Achse 84′ der Kolbenstange 84 zusammenfällt.

Zur Erzielung der erforderlichen Vorspannung des Führungsgelenkes 130 liegt die Sacklochbohrung 144 unter einem Winkel α zur Lagerachse 146. Die Befestigung der Kolbenstange 84 ist analog zur Konstruktion gemäß Figur 4 getroffen.

Wie bei 148 strichpunktiert angedeutet ist, kann der Gummikörper 138 durch Einvulkanisieren wenigstens eines Blechmantels als Gummi-Metallelement ausgebildet sein.

## Patentansprüche

1. Gelenkte Achse für spurführbare Nutzfahrzeuge, insbesondere Omnibusse, an deren Radträgern (10) radinnenseitig jeweils ein sich in Fahrtrichtung (F) erstreckender, das Fahrzeugrad (14) frontseitig übergreifender Tragarm (38, 38′, 38˝) gehalten ist, der an seinem freien Armende (38˝) eine um eine vertikale Achse (117) drehende Spurführungsrolle (124) trägt und dem eine Lenkeinrichtung (19) mit zwischen am Radträger angeordnetem Lenkhebel (38, 38′, 38˝) und Lenkgetriebe (122) angreifender Spurstange (110, 110′) zugeordnet ist,
**dadurch gekennzeichnet**,
daß die Lenkhebel (38, 38′, 38′′) der Radträger (10) die Tragarme bilden und daß in Geradeausfahrstellung der Räder die Spurstange am jeweiligen Tragarm (38, 38′, 38′′) derart angeordnet ist, daß sie diesen bei auf die Drehachse der Spurführungsrolle (124) gerichteter Längsachse (115) in seinem äußeren, der Spurführungsrolle (124) benachbarten Bereich abstützt.

2. Gelenkte Achse nach Anspruch 1,
**dadurch gekennzeichnet**,
daß die Spurstange zumindest zweigeteilt ist und die Spurstangenteilstücke (110, 110′) mit ihrem inneren Ende (111, 111′) an einem durch das Lenkgetriebe (122) verschwenkbaren Lenkzwischenhebel (114) und mit ihrem äußeren Ende (113) am jeweils zugeordnetem Tragarm (38, 38′ 38′′) angelenkt sind.

3. Lenkachse nach Anspruch 1 oder 2,
**dadurch gekennzeichnet**,
daß sich der Lenkzwischenhebel (114) in der Geradeausfahrstellung der Räder (14) in der Fahrzeuglängsmittenebene (a-a) erstreckt.

## Claims

1. A steered axle for track-steerable utility vehicles, particularly omnibuses, on the wheel supports (10) of which, on the wheel inner side, there is respectively held a carrier arm (38, 38′, 38˝) extending in the direction of travel (F) and forwardly overlapping the vehicle wheel (14), which carrier arm carries at its free end (38˝) a track guide roller (124) rotating around a vertical axis (117), there being associated with the said carrier arm a steering device (19) with track rod (110, 110′) engaging with steering arms (38, 38′, 38˝) mounted in between on the wheel carriers and steering gear (122), characterized in that the steering arms (38, 38′, 38˝) of the wheel carriers (10) form the carrier arms, and in that, in straightforward drive position of the wheels, the track rod is mounted on the respective carrier arm (38, 38′, 38˝) in such a manner that it supports it when the longitudinal axis (115) is directed towards the rotating axis of the track guide roller (124) in its outer region adjacent to the track guide roller (124).

2. A steered axle according to claim 1, characterized in that the track rod is divided into at least two portions, and the track rod portions (110, 110′) are pivoted at their inner end (111,111′) on an intermediate steering arm (114) pivotable by the steering gear (122) , and at their outer end (113) on the respectively associated carrier arm (38, 38′, 38˝).

3. A steered axle according to either claim 1 or claim 2, characterized in that the intermediate steering arm (114) extends along the longitudinal centre plane (a-a) when the wheels (14) are in the straightforward drive position.

## Revendications

1. Essieu directeur pour véhicules utilitaires guidables sur piste, notamment des autobus, sur les supports de roues desquels est retenu, sur le côté intérieur des roues, respectivement un bras porteur (38, 38′, 38˝) orienté dans le sens de marche (F), contournant par l'avant la roue de véhicule (14), portant à son extrémité libre (38˝) un rouleau de guidage sur piste (124), tournant autour d'un axe vertical (117), et auquel est associé un dispositif de direction (19) comportant une barre d'accouplement (110, 110′) montée entre le levier de direction (38, 38′, 38˝) disposé sur le support de roue et le mécanisme de direction (122), caractérisé en ce que les leviers de direction (38, 38′, 38˝) des supports de roues (10) constituent les bras porteurs et en ce que, dans la position de roulement en ligne droite des roues, la barre d'accouplement est disposée sur le bras porteur correspondant (38, 38′, 38˝) de telle sorte qu'elle soutienne celui-ci, quand l'axe longitudinal (115) est dirigé vers l'axe de rotation du rouleau de guidage sur piste (124), dans sa zone extérieure, adjacente au rouleau de guidage sur piste (124).

2. Essieu directeur selon la revendication 1, caractérisé en ce que la barre d'accouplement est divisée en au moins deux parties et ces parties (110, 110′) de la barre d'accouplement sont articulées par leur extrémité intérieure (111, 111′) sur un levier intermédiaire de direction (114), déplaçable en pivotement par le mécanisme de direction (122), et par leur extrémité extérieure (113) sur le bras porteur (38, 38′, 38˝) respectivement associé.

3. Essieu directeur selon la revendication 1 ou 2, caractérisé en ce que le levier intermédiaire de direction (114) est situé, dans la position de roulement en ligne droite des roues (14), dans le plan longitudinal central (a-a) du véhicule.
